# EUROPEAN PATENT APPLICATION

(11) **EP 4 675 973 A1**
(43) Date of publication of application: **07.01.2026**
(21) Application number: 23924566.5
(22) Date of filing: 28.02.2023
(51) Int. Cl.: H04L 9/40, G07C 9/00, B60R 25/24, H04L 9/32, H04W 12/069

(54) **AUTHENTICATION METHOD, APPARATUS, AND SYSTEM**

(71) Applicant: Shenzhen Yinwang Intelligent Technologies Co., Ltd., Shenzhen, Guangdong 518110 (CN)
(72) Inventor: WANG, Yangyizhou, Shenzhen, Guangdong 518129 (CN); ZHANG, Li, Shenzhen, Guangdong 518129 (CN); YANG, Yanjiang, Shenzhen, Guangdong 518129 (CN); WEI, Zhuo, Shenzhen, Guangdong 518129 (CN)
(74) Representative: Pfenning, Meinig & Partner mbB
(86) International application number: PCT/CN2023/078652
(87) International publication number: WO 2024/178591

(57) **Abstract**

An authentication method, apparatus, and system are provided. The method includes: A first node receives control request information from a second node. The control request information is used to request to perform a preset operation on a first device, and the first device includes the first node and the second node. The first node checks first check information. The first check information is used by the first node to check whether a source device of the control request information is authorized. When the check succeeds, the first node controls, based on the control request information, the first device to perform the preset operation. The authentication method in this application may be applied to an intelligent driving device such as a new energy vehicle or an electric vehicle, or may be applied to a three-node system such as a three-node system in the IT field or a three-node system in the industrial control field, to help improve security of the authentication system.

## Description

### TECHNICAL FIELD

This application relates to the field of security authentication technologies, and more specifically, to an authentication method, apparatus, and system.

### BACKGROUND

Digital car keys are highly popular among users due to their convenience, and a penetration rate of the digital car keys increases year by year. However, in recent years, digital keys have become one of the most popular cyber attack surfaces for hackers. For example, according to data from Tracker, the largest stolen vehicle recovery company in the UK, 92% and 93% of stolen vehicles in 2019 and 2020, respectively, were stolen through vulnerabilities in a passive keyless entry (passive keyless entry, PKE) technology.

To prevent attacks such as a relay attack and a replay attack on the digital key, when the digital key is used to control opening of a vehicle door, authentication between a "key device" and a "digital key signal processing unit" and authentication between the "digital key signal processing unit" and an "in-vehicle control unit" need to be completed.

However, the foregoing authentication method can only reduce a risk of an attack on the key device, but cannot prevent the digital key signal processing unit from being attacked. When the digital key signal processing unit is attacked, the in-vehicle control unit may unconditionally execute an instruction from the digital key signal processing unit. This leads to vehicle theft, causing property loss to a user, and even posing a threat to user's personal safety.

In view of this, a digital key authentication solution which can improve security needs to be developed urgently.

### SUMMARY

This application provides an authentication method, apparatus, and system, to help improve reliability and security of performing security authentication on a three-node system.

According to a first aspect, an authentication method is provided. The method may be performed by an intelligent driving device, or may be performed by a chip or a circuit used for the intelligent driving device, for example, performed by a chip or a circuit in a computing platform of the intelligent driving device. This is not limited in this application.

The intelligent driving device in this application may include a vehicle on a road, a vehicle on water, an air vehicle, an industrial device, an agricultural device, an entertainment device, or the like. For example, the intelligent driving device may be a vehicle. The vehicle is a vehicle in a broad sense, and may be a transportation tool (for example, a commercial vehicle, a passenger vehicle, a motorcycle, an airborne vehicle, or a train), an industrial vehicle (for example, a forklift truck, a trailer, or a tractor), an engineering vehicle (for example, an excavator, a bulldozer, or a crane), an agricultural device (for example, a lawn mower or a harvester), a recreational device, a toy vehicle, or the like. A type of the vehicle is not specifically limited in embodiments of this application. For another example, the intelligent driving device may be a transportation tool like an airplane or a ship.

The method includes: A first node receives control request information from a second node. The control request information is used to request to perform a preset operation on a first device, and the first device includes the first node and the second node. The first node checks first check information. The first check information is used by the first node to check whether a source device of the control request information is authorized. When the check succeeds, the first node controls, based on the control request information, the first device to perform the preset operation; or when the check fails, the first node ignores the control request information.

In the foregoing technical solution, when receiving the control request information from the second node, the first node does not unconditionally execute the control request information, but executes the control request information when determining that the source device of the control request information is an authorized device. When the second node is attacked by an attacker, the control request information sent by the attacker can be shielded, to improve security of an authentication process, thereby improving security of the first device.

In some possible implementations, that the first node checks the first check information includes: The first node checks the first check information by using information associated with the second device. The second device is an authorized device configured to control the first device to perform the preset operation. The information associated with the second device may include a shared key negotiated by the first device and the second device, a public key of the second device, and the like.

For example, when the foregoing technical solution is applied to a keyless entry system, the first device may be an intelligent driving device such as a vehicle. The first node may include an in-vehicle control unit, for example, an in-vehicle distributed gateway (vehicle intranet unit, VIU) or a vehicle domain controller (vehicle domain controller, VDC). The second node may include a digital key signal processing unit, for example, a Bluetooth low energy (Bluetooth low energy, BLE) primary node. The preset operation may include an operation of controlling one or more components in the vehicle, for example, unlocking a vehicle door, starting a vehicle, or turning on a cockpit air conditioner.

When the foregoing technical solution is applied to an information technology (information technology, IT) three-node system or an industrial control three-node system, the preset operation may be another operation that can be performed only after security authentication is performed.

It may be understood that the three-node system in this application includes three nodes, for example, a node 1 to a node 3. The node 1 needs to control the node 3 via a node 2.

In some possible implementations, the source device of the control request information is an authorized device that controls the first device to perform the preset operation. For example, the source device has completed authentication with the first device by using the second node, or a user of the source device is an authorized user of the first device. In this case, a source of the first check information is also the source device. For example, the first check information may be forwarded by the source device to the first node via a cloud server, or the first check information may alternatively be transparently transmitted by the source device to the first node by using the second node. Further, when the first node checks the first check information, the checks succeeds.

In some possible implementations, if the source device of the control request information is an unauthorized device of the attacker, a source of the first check information may be the source device, or a source of the first check information may be an authorized device that controls the first device to perform the preset operation. Further, when the first node checks the first check information, the check fails.

With reference to the first aspect, in some implementations of the first aspect, before the first node checks the first check information, the method further includes: The first node sends check request information based on the control request information. The check request information is used to request the first check information from a second device, and the second device is an authorized device configured to control the first device to perform the preset operation. The first node receives the first check information.

For example, the check request information may be a challenge packet, or may be information that includes a random number and that is generated based on a principle of zero-knowledge proof, or may be other information that can trigger the second device to send the first check information.

For example, the first check information may be transparently transmitted by the second device to the first node by using the second node.

In the foregoing technical solution, when receiving the control request information, the first node directly sends related information to the authorized device to obtain the first check information, to determine, based on the first check information, whether a source of the control request information is the authorized device. When the source of the control request information is not the authorized device, the control request information is not executed, thereby helping improve security of the first device.

With reference to the first aspect, in some implementations of the first aspect, the check request information includes a first random number, the first check information is associated with the first random number and a shared key between the first device and the second device, and that the first node checks the first check information includes: The first node checks the first check information based on the shared key.

For example, that the first check information is associated with the first random number and the shared key between the first device and the second device includes: The first check information is generated based on the first random number and the shared key.

In some possible implementations, the first check information is generated based on control information sent by the second device, the first random number, and the shared key.

In some possible implementations, before the first node checks the first check information based on the shared key, the method further includes: The first node generates and/or obtains the shared key.

For example, the shared key may be dynamically generated by the first node. After generating the shared key, the first node sends the shared key to the second device by using a cloud server or a wireless communication network (for example, BLE), or the second device obtains the shared key by actively scanning a specific two-dimensional code.

In the foregoing technical solution, the first check information generated based on the first random number is checked, thereby helping prevent a replay attack and further improving security of the first device.

With reference to the first aspect, in some implementations of the first aspect, before the first node checks the first check information, the method further includes: The first node receives the first check information from the second node.

For example, when receiving the control request information, the first node receives the first check information.

For example, the control request information and the first check information may be transmitted by using a same packet, or may be transmitted by using two packets.

For example, the first check information may be forwarded by the authorized device to the first node by using the second node, or may be forwarded by the unauthorized device to the first node by using the second node.

With reference to the first aspect, in some implementations of the first aspect, the method further includes: The first node receives a first public key of a second device. The second device is an authorized device configured to control the first device to perform the preset operation. That the first node checks the first check information includes: The first node checks the first check information based on the first public key.

In the foregoing technical solution, the first check information can be checked by using only the public key of the second device stored in the first node, without requiring an additional shared key deployed between the second device and the first node, thereby helping reduce key management complexity.

With reference to the first aspect, in some implementations of the first aspect, the first check information is associated with a signature generated based on a first private key of the second device, the first private key and the first public key are a key pair, and that the check succeeds includes: The first node successfully checks the first check information by using the first public key.

With reference to the first aspect, in some implementations of the first aspect, the first check information includes a time identifier, and the time identifier indicates a moment at which the first check information is generated.

For example, the time identifier may include a timestamp, or may further include information that is in another form and that identifies a moment at which the first check information is generated.

In the foregoing technical solution, a time identifier such as a timestamp is added to the first check information, thereby helping prevent a replay attack and further improving security of the first device.

With reference to the first aspect, in some implementations of the first aspect, the method further includes: when the first node receives the control request information, determining whether the first check information is received; and when the first node does not receive the first check information within preset duration, determining that the check fails.

In some possible implementations, the authorized device and the first device agree that the authorized device sends the first check information while sending the control request information to the second node. Furthermore, the second node sends the control request information and the first check information to the first node at the same time. Therefore, when the first node receives the control request information but does not receive the first check information, it is considered that the control request information is sent by the unauthorized device, and it is determined that the check fails.

In some possible implementations, the authorized device and the first device agree that, after receiving the control request information sent by the second node, the first node requests the first check information from the authorized device by using the check request information. In a specific implementation process, if the first node does not receive the first check information within the preset duration because the authorized device is faulty or the check request information or the first check information is illegally intercepted, it is determined that the check fails.

For example, the preset duration may be 0.2 second, or may be 0.5 second, or may be other duration.

In the foregoing technical solution, a determining condition for determining that the check fails is set, so that reliability and robustness of an authentication system can be improved, thereby helping further improve security of the first device.

According to a second aspect, an authentication method is provided. The method may be performed by a mobile terminal, or may be performed by a chip or a circuit used in the mobile terminal. This is not limited in this application.

The mobile terminal in this application may include a key device such as a smart key, or various handheld devices, wearable devices, computing devices or other processing devices connected to a wireless modem, various forms of terminals, mobile stations, user equipment, and the like that have a wireless communication function, for example, a watch, a band, a wireless headset, or an electronic wallet. This is not limited in this embodiment of this application.

The method includes: A second device generates first check information. The second device is an authorized device configured to control a first device to perform a preset operation, the first check information is used by a first node of the first device to check whether a source device of control request information is authorized, and the control request information is used to request to perform the preset operation on the first device. The second device sends the first check information.

In some possible implementations, the second device generates the first check information when generating or sending the control request information.

For example, that the second device sends the first check information includes: The second device sends the first check information to the first node of the first device.

In the foregoing technical solution, the authorized device sends the first check information to the first node of the first device, so that the first device determines, based on the first check information, whether a source of the control request information is the authorized device. When the source of the control request information is not the authorized device, the control request information is not executed, thereby helping improve security of the first device.

With reference to the second aspect, in some implementations of the second aspect, the method further includes: The second device receives check request information. The check request information is used to request the first check information. That the second device sends the first check information includes: The second device sends the first check information based on the check request information.

For example, the second device transparently transmits the first check information to the first node of the first device by using a second node of the first device.

With reference to the second aspect, in some implementations of the second aspect, the check request information includes a first random number, and the method further includes: The second device generates the first check information based on the first random number and a shared key between the first device and the second device.

In some possible implementations, before second device generates the first check information, the method further includes: The second device obtains the shared key.

For example, the shared key may be dynamically generated by the first device. After generating the shared key, the first device sends the shared key to the second device by using a cloud server or a wireless communication network (for example, BLE), or the second device obtains the shared key by actively scanning a specific two-dimensional code.

In the foregoing technical solution, the first check information is generated based on the first random number for checking by the first node of the first device, thereby helping prevent a replay attack and further improving security of the first device.

With reference to the second aspect, in some implementations of the second aspect, the first check information includes a signature generated by the second device based on a first private key of the second device, the first private key and a first public key are a key pair, and the first public key is used to check the first check information.

In the foregoing technical solution, the first check information can be checked by using only the public key of the second device, without requiring an additional shared key deployed between the second device and the first node, thereby helping reduce key management complexity.

With reference to the second aspect, in some implementations of the second aspect, the method further includes: The second device sends the first public key.

For example, the second device sends the first public key to the first device. For example, in a phase of initial pairing (or initial authentication) between the first device and the second device, the second device sends the first public key to the first device.

With reference to the second aspect, in some implementations of the second aspect, the first check information further includes a time identifier, and the time identifier indicates a moment at which the first check information is generated.

In the foregoing technical solution, a time identifier such as a timestamp is added to the first check information, thereby helping prevent a replay attack and further improving security of the first device.

According to a third aspect, an authentication method is provided. The method may be performed by an intelligent driving device, or may be performed by a chip or a circuit used for the intelligent driving device, for example, performed by a chip or a circuit in a computing platform of the intelligent driving device. This is not limited in this application.

The method includes: A second node of a first device obtains first check information. The first check information is used by a first node of the first device to check whether a source device of control request information is authorized, and the control request information is used to request to perform a preset operation on the first device. The second node sends the first check information.

For example, that the second node of the first device obtains the first check information includes: The second node obtains the first check information from an authorized device; or the second node obtains the first check information from an unauthorized device.

In the foregoing technical solution, after obtaining the first check information, the second node of the first device sends the first check information to the first node of the first device, so that the first device determines, based on the first check information, whether a source of the control request information is the authorized device. When the source of the control request information is not the authorized device, the control request information is not executed, thereby helping improve security of the first device.

With reference to the third aspect, in some implementations of the third aspect, the first check information is associated with a first random number and a shared key between the first device and a second device, and the second device is an authorized device configured to control the first device to perform the preset operation.

In the foregoing technical solution, the first check information is associated with the first random number, thereby helping prevent a replay attack and further improving security of the first device.

With reference to the third aspect, in some implementations of the third aspect, the first check information is associated with a signature generated based on a first private key of the second device, the first private key and a first public key are a key pair, and the second device is an authorized device configured to control the first device to perform the preset operation. The method further includes: The second node sends the first public key.

That the second node sends the first public key includes: The second node sends the first public key to the first node of the first device, so that the first node checks the first check information based on the first public key.

In the foregoing technical solution, the first check information can be checked by using only the public key of the second device, without requiring an additional shared key deployed between the second device and the first node, thereby helping reduce key management complexity.

With reference to the third aspect, in some implementations of the third aspect, the first check information includes a time identifier, and the time identifier indicates a moment at which the first check information is generated.

In the foregoing technical solution, a time identifier such as a timestamp is added to the first check information, thereby helping prevent a replay attack and further improving security of the first device.

According to a fourth aspect, an authentication apparatus is provided. The apparatus includes a transceiver unit, a check unit, and a processing unit. The transceiver unit is configured to receive control request information from a second node. The control request information is used to request to perform a preset operation on a first device, and the first device includes the second node. The check unit is configured to check first check information. The first check information is used by the first node to check whether a source device of the control request information is authorized. The processing unit is configured to: when the check succeeds, control, based on the control request information, the first device to perform the preset operation; or when the check fails, ignore the control request information.

With reference to the fourth aspect, in some implementations of the fourth aspect, the transceiver unit is further configured to: send check request information based on the control request information, where the check request information is used to request the first check information from a second device, and the second device is an authorized device configured to control the first device to perform the preset operation; and receive the first check information.

With reference to the fourth aspect, in some implementations of the fourth aspect, the check request information includes a first random number, the first check information is associated with the first random number and a shared key between the first device and the second device, and the check unit is configured to check, the first check information based on the shared key.

With reference to the fourth aspect, in some implementations of the fourth aspect, the transceiver unit is further configured to receive the first check information from the second node.

With reference to the fourth aspect, in some implementations of the fourth aspect, the transceiver unit is further configured to receive a first public key of a second device. The second device is an authorized device configured to control the first device to perform the preset operation. The check unit is configured to check the first check information based on the first public key.

With reference to the fourth aspect, in some implementations of the fourth aspect, the first check information is associated with a signature generated based on a first private key of the second device, the first private key and the first public key are a key pair, and that the check unit checks successfully includes: The check unit successfully checks the first check information by using the first public key.

With reference to the fourth aspect, in some implementations of the fourth aspect, the first check information includes a time identifier, and the time identifier indicates a moment at which the first check information is generated.

With reference to the fourth aspect, in some implementations of the fourth aspect, the processing unit is further configured to: when the transceiver unit receives the control request information, determine whether the first check information is received; and when the transceiver unit does not receive the first check information within preset duration, determine that the check fails.

According to a fifth aspect, an authentication apparatus is provided. The apparatus is disposed in an authorized device configured to control a first device to perform a preset operation, and the apparatus includes a generation unit and a transceiver unit. The generation unit is configured to generate first check information. The first check information is used by a first node of the first device to check whether a source device of control request information is authorized, and the control request information is used to request to perform the preset operation on the first device. The transceiver unit is configured to send the first check information.

With reference to the fifth aspect, in some implementations of the fifth aspect, the transceiver unit is further configured to: receive check request information, where the check request information is used to request the first check information; and send the first check information based on the check request information.

With reference to the fifth aspect, in some implementations of the fifth aspect, the check request information includes a first random number, and the generation unit is configured to generate the first check information based on the first random number and a shared key between the first device and the authorized device.

With reference to the fifth aspect, in some implementations of the fifth aspect, the first check information includes a signature generated by the generation unit based on a first private key of the authorized device, the first private key and a first public key are a key pair, and the first public key is used to check the first check information.

With reference to the fifth aspect, in some implementations of the fifth aspect, the transceiver unit is further configured to send the first public key of the authorized device.

With reference to the fifth aspect, in some implementations of the fifth aspect, the first check information further includes a time identifier, and the time identifier indicates a moment at which the first check information is generated.

According to a sixth aspect, an authentication apparatus is provided. The apparatus includes an obtaining unit and a sending unit. The obtaining unit is configured to obtain first check information. The first check information is used by a first node of a first device to check whether a source device of control request information is authorized, and the control request information is used to request to perform a preset operation on the first device. The sending unit sends the first check information.

With reference to the sixth aspect, in some implementations of the sixth aspect, the first check information is associated with a first random number and a shared key between the first device and a second device, and the second device is an authorized device configured to control the first device to perform the preset operation.

With reference to the sixth aspect, in some implementations of the sixth aspect, the first check information is associated with a signature generated based on a first private key of the second device, the first private key and a first public key are a key pair, and the second device is an authorized device configured to control the first device to perform the preset operation. The sending unit is further configured to send the first public key.

With reference to the sixth aspect, in some implementations of the sixth aspect, the first check information includes a time identifier, and the time identifier indicates a moment at which the first check information is generated.

According to a seventh aspect, an authentication apparatus is provided. The apparatus includes: a memory, configured to store a computer program; and a processor, configured to execute the computer program stored in the memory, to enable the apparatus to perform the method in any one of the possible implementations of the first aspect to the third aspect.

According to an eighth aspect, a communication system is provided. The communication system includes the apparatus in any one of the possible implementations of the third aspect, and the apparatus in any one of the possible implementations of the sixth aspect.

According to a ninth aspect, an intelligent driving device is provided. The intelligent driving device includes the system in any one of the possible implementations of the seventh aspect.

With reference to the ninth aspect, in some implementations of the ninth aspect, the intelligent driving device is a vehicle.

According to a tenth aspect, a mobile terminal is provided. The intelligent driving device includes the apparatus in any one of the possible implementations of the fifth aspect.

According to an eleventh aspect, a computer program product is provided. The computer program product includes computer program code. When the computer program code is run on a computer, the computer is enabled to perform the method in any one of the possible implementations of the first aspect to the third aspect.

It should be noted that all or some of the computer program code may be stored in a first storage medium. The first storage medium may be encapsulated together with a processor, or may be encapsulated separately from a processor.

According to a twelfth aspect, a computer-readable medium is provided. The computer-readable medium stores instructions. When the instructions are executed by a processor, the processor is enabled to implement the method in any one of the possible implementations of the first aspect to the third aspect.

According to a thirteenth aspect, a chip is provided. The chip includes a circuit, and the circuit is configured to perform the method in any one of the possible implementations of the first aspect to the third aspect.

### BRIEF DESCRIPTION OF DRAWINGS

FIG. 1 is a block diagram of a keyless entry system;
FIG. 2 is a block diagram of an authentication system according to an embodiment of this application;
FIG. 3 is a schematic flowchart of an authentication method according to an embodiment of this application;
FIG. 4 is another schematic flowchart of an authentication method according to an embodiment of this application;
FIG. 5 is still another schematic flowchart of an authentication method according to an embodiment of this application;
FIG. 6 is a block diagram of an authentication apparatus according to an embodiment of this application;
FIG. 7 is another block diagram of an authentication apparatus according to an embodiment of this application;
FIG. 8 is yet another block diagram of an authentication apparatus according to an embodiment of this application;
FIG. 9 is yet another block diagram of an authentication apparatus according to an embodiment of this application; and
FIG. 10 is a block diagram of an authentication system according to an embodiment of this application.

### DESCRIPTION OF EMBODIMENTS

In descriptions of embodiments of this application, "/" means "or" unless otherwise specified. For example, A/B may indicate A or B. In this specification, "and/or" describes an association relationship between associated objects and indicates that three relationships may exist. For example, A and/or B may indicate the following three cases: Only A exists, both A and B exist, and only B exists. In this application, "at least one" means one or more, and "a plurality of" means two or more. "At least one of the following" or a similar expression thereof means any combination of these items, including any combination of single items or a plurality of items. For example, at least one of a, b, or c may represent a, b, c, a and b, a and c, b and c, or a, b, and c, where a, b, and c may be singular or plural.

Prefix words "first", "second", and the like in embodiments of this application are merely intended to distinguish between different objects, and impose no limitation on positions, sequences, priorities, quantities, content, or the like of the described objects. Use of prefix words such as ordinal numbers used to distinguish the described objects in embodiments of this application does not constitute a limitation on the described objects. For descriptions of the described objects, refer to the context description in claims or embodiments, and the use of such prefix words should not constitute a redundant limitation.

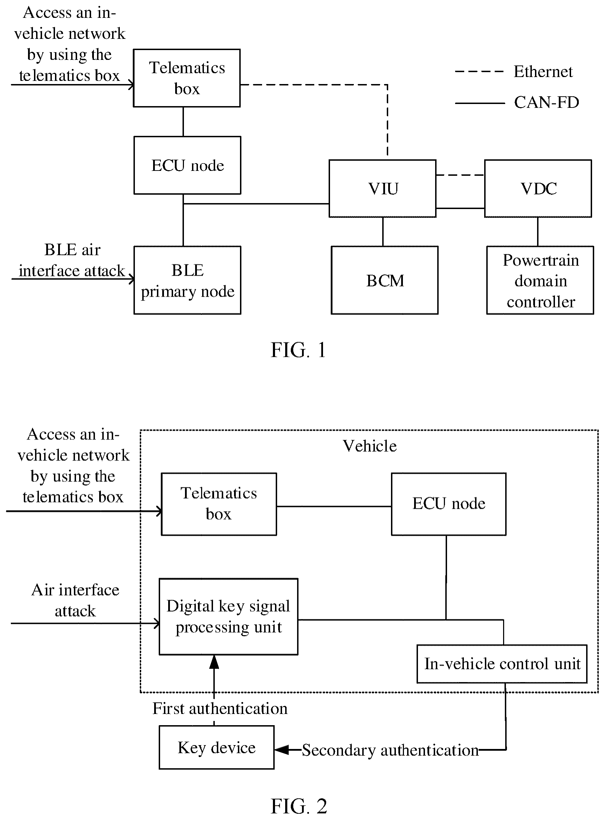

As shown in FIG. 1, when a digital key is used to control opening of a vehicle door, authentication between a key device and a digital key signal processing unit and authentication between the digital key signal processing unit and an in-vehicle control unit usually need to be completed. The digital key signal processing unit may include a BLE primary node, and the in-vehicle control unit may include a VIU and a VDC. After the foregoing authentication is completed, the in-vehicle control unit sends control request information to a body control module (body control module, BCM), a powertrain domain controller, and the like, to implement control on a vehicle, such as unlocking the vehicle door and starting the vehicle.

However, the foregoing authentication method can only reduce a risk of an attack on the key device, but cannot prevent the digital key signal processing unit from being attacked. When the digital key signal processing unit is attacked, the in-vehicle control unit may unconditionally execute an instruction from the digital key signal processing unit, leading to vehicle theft and causing property loss to a user. As shown in FIG. 1, an attacker may attack a BLE primary node through a BLE air interface attack, or the attacker may access an in-vehicle network by using a telematics box (telematics box, T-Box), and attack the BLE primary node by using an electronic control unit (electronic control unit, ECU).

In view of this, this application provides an authentication method, apparatus, and system. When the in-vehicle control unit receives control information sent by the digital key signal processing unit, the in-vehicle control unit checks whether a source device of the control information is authorized. When the check succeeds, the in-vehicle control unit controls unlocking and/or starting of the vehicle based on the control information. When the check fails, the in-vehicle control unit ignores the control information sent by the digital key signal processing unit, so that security of the digital key signal processing unit can be improved. Even if the digital key signal processing unit is attacked, attack spreading can be prevented by using the authentication method, apparatus, and system provided in this application, thereby improving vehicle security and ensuring property security of the user.

The following describes technical solutions of embodiments in this application with reference to accompanying drawings.

FIG. 2 is a block diagram of an authentication system according to an embodiment of this application. As shown in FIG. 2, the system includes a vehicle and a key device. The key device is an authorized device configured to control unlocking and/or starting of a vehicle. For example, the key device has completed pairing or authentication with the vehicle by using a digital key signal processing unit. For example, the vehicle includes a telematics box, an ECU node, the digital key signal processing unit, and an in-vehicle control unit. An attacker may attack the digital key signal processing unit through the telematics box and the ECU node, or may attack the digital key signal processing unit through an air interface attack. In this embodiment of this application, when the key device is used to control the vehicle, after first authentication is completed between the key device and the digital key signal processing unit and between the digital key signal processing unit and the in-vehicle control unit, when the in-vehicle control unit receives control information of the digital key signal processing unit, the in-vehicle control unit further completes secondary authentication with the key device. When the secondary authentication succeeds, the in-vehicle control unit controls the vehicle based on the control information.

For example, the digital key signal processing unit may include a wireless communication module, for example, may include a BLE module, a radio frequency identification (radio frequency identification, RFID) module, an ultra-wideband (ultra-wideband, UWB) module, a near-field communication (near-field communication, NFC) module, and another wireless short-range communication system (for example, an in-vehicle wireless short-range communication system). Correspondingly, the key device may include a wireless short-range communication device such as a BLE device or an NFC device.

For example, the in-vehicle control unit may include at least one of a VIU, a VDC, an autonomous driving domain controller (advanced driving domain controller, ADC), and a chassis domain controller (chassis domain controller, CDC). Alternatively, the in-vehicle control unit may further include an in-car application-server (in-car application-server, ICAS) controller, a body domain controller (body domain controller, BDC), a special equipment system (special equipment system, SAS), a media graphics unit (media graphics unit, MGU), a body super core (body super core, BSC), an advanced driver-assistance system super core (advanced driver-assistance system super core, ADAS super core), and the like. This is not limited in this application. The ICAS may include at least one of the following: a vehicle control server ICAS 1, an intelligent driving server ICAS 2, an intelligent cockpit server ICAS 3, and an infotainment server ICAS 4.

For example, the in-vehicle control unit, the digital key signal processing unit, and the key device may each include one or more processors. The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field-programmable gate array (field-programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the in-vehicle control unit, the digital key signal processing unit, and the key device each may further include a memory. The memory is configured to store instructions. Some or all of the processors may invoke the instructions in the memory to execute the instructions, to implement a corresponding function.

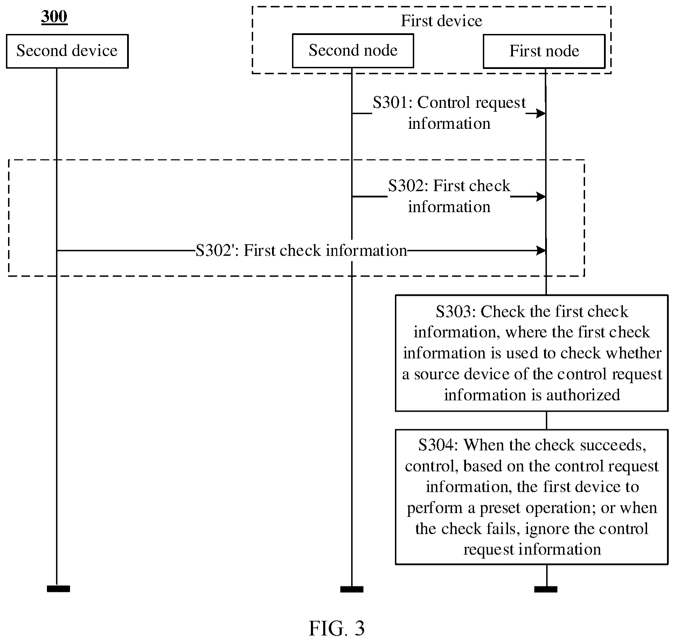

FIG. 3 is a schematic flowchart of an authentication method according to an embodiment of this application. The method 300 may include S301 to S304, and either S302 or S302' may be performed.

S301: A second node sends control request information to a first node.

Both the first node and the second node are included in a first device.

For example, the second node may include the digital key signal processing unit in the foregoing embodiment, and the first node may include the in-vehicle control unit in the foregoing embodiment.

For example, the control request information may be used to request to perform a preset operation on the first device.

When this embodiment of this application is applied to an intelligent driving device, for example, a vehicle, the preset operation may include an operation of controlling one or more components in the vehicle, for example, unlocking a vehicle door, starting a vehicle, or turning on a cockpit air conditioner.

For example, the control request information may be sent to the second node by an authorized device that is used to control the first device to perform the preset operation; or the control request information may be sent to the second node by an unauthorized device.

S302: The second node sends first check information to the first node.

For example, the first check information may be from the authorized device configured to control the first device to perform the preset operation, or may be from the unauthorized device.

In some possible implementations, S301 and S302 may be simultaneously performed. That is, the second node sends the control request information and the first check information to the first node at the same time. Specifically, the second node may include the control request information and the first check information in a same packet for sending, or may separately include the control request information and the first check information in different packets for sending.

S302': A second device sends the first check information to the first node.

The second device is an authorized device configured to control the first device to perform the preset operation. For example, the second device may include the key device in the foregoing embodiment.

In some possible implementations, before S301 is performed, authentication between the second device and the second node is completed based on a specific protocol, a secure communication channel is established between the second device and the second node, and the second device may transfer a control instruction to the first device by using the second node. For example, the specific protocol may include a car connectivity consortium (car connectivity consortium, CCC) protocol.

For example, the second device may transparently transmit the first check information to the first node by using the second node. For example, the second device transparently transmits the first check information to the first node by using a BLE air interface; or the second device may send the first check information to the first node by using a cloud server.

In some possible implementations, the second device sends the first check information to the first node based on the check request information.

S303: The first node checks the first check information, where the first check information is used to check whether a source device of the control request information is authorized.

For example, the first node checks the first check information by using information associated with the authorized device.

For example, the authorized device is the second device. The first node may check the first check information by using a first public key of the second device; or the first node may check the first check information by using a shared key, where the shared key is a key negotiated by the first device and the second device.

S304: When the check succeeds, the first node controls, based on the control request information, the first device to perform the preset operation; or when the check fails, the first node ignores the control request information.

When the check succeeds, it is determined that the source device of the control request information is the authorized device, and the first device may be controlled, based on a control request, to perform the preset operation.

In the authentication method provided in this embodiment of this application, when receiving the control request information from the second node, the first node does not unconditionally execute the control request information, but executes the control request information when determining that the source device of the control request information is the authorized device. When the second node is attacked by an attacker, the control request information sent by the attacker can be shielded, to improve security of an authentication process, thereby improving security of the first device.

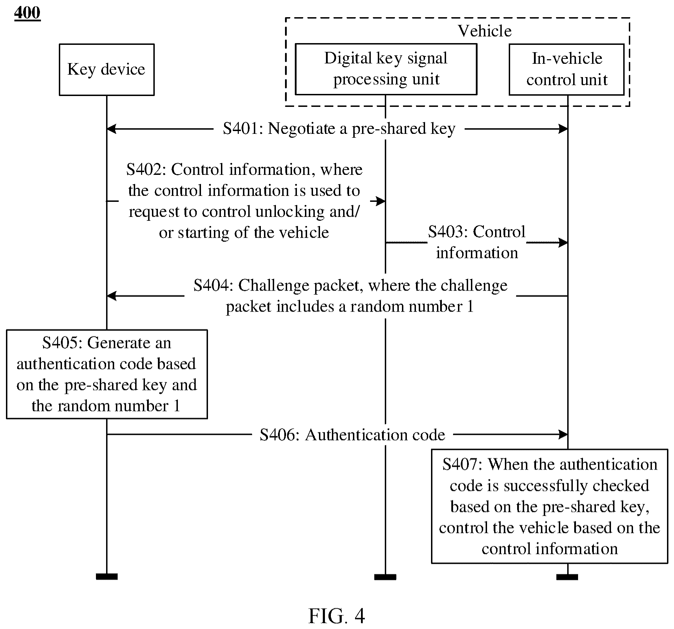

FIG. 4 is another schematic flowchart of an authentication method according to an embodiment of this application. The method 400 may be understood as an extension of the method 300. A vehicle may be understood as an example of a first device, a digital key signal processing unit may be understood as an example of a second node, an in-vehicle control unit may be understood as an example of a first node, and a key device may be understood as an example of a second device. The method 400 may include S401 to S407. S404 to S406 may be understood as an implementation of S302'.

S401: The key device negotiates a pre-shared key with the in-vehicle control unit.

The pre-shared key may be understood as an example of the shared key in the foregoing embodiment.

In some possible implementations, during initial pairing (initial authentication) between the key device and the in-vehicle control unit, the key device and the in-vehicle control unit negotiate the pre-shared key.

For example, the pre-shared key may be dynamically generated by the vehicle. Specifically, the pre-shared key may be generated by a hardware security module inside the in-vehicle control unit. For example, if the in-vehicle control unit is a VIU, the pre-shared key is generated by a hardware security module (hardware security module, HSM) inside the VIU. Further, the in-vehicle control unit sends the pre-shared key to the key device. In an example, the in-vehicle control unit sends the pre-shared key to the key device by using the cloud server, and a transmission path of the pre-shared key is: in-vehicle control unit-T-Box-cloud server-key device. In another example, the in-vehicle control unit sends the pre-shared key to the key device through BLE, and a transmission path of the pre-shared key is: in-vehicle control unit-digital key signal processing unit-key device.

S402: The key device sends control information to the digital key signal processing unit, where the control information is used to request to control unlocking and/or starting of the vehicle.

The control information may be understood as an example of the control request information in the foregoing embodiment, and unlocking and/or starting of the vehicle may be understood as an example of the preset operation in the foregoing embodiment.

S403: The digital key signal processing unit sends the control information to the in-vehicle control unit.

S404: The in-vehicle control unit sends a challenge packet to the key device, where the challenge packet includes a random number 1.

The challenge packet may be an example of the check request information in the foregoing embodiment, and the random number 1 may be an example of the first random number in the foregoing embodiment.

For example, the random number 1 may be generated by a true random number generator (true random number generator, TRNG) of the in-vehicle control unit, or may be generated by a cryptography pseudo random number generator (cryptography secure pseudo random number generator, CPRNG), or may be generated in another manner.

S405: The key device generates an authentication code based on the pre-shared key and the random number 1.

The authentication code may be understood as an example of the first check information in the foregoing embodiment.

For example, a form of the authentication code may be MAC (A, η), where A represents the control information sent by the key device, and η represents the random number 1.

S406: The key device sends the authentication code to the in-vehicle control unit.

S407: When successfully checking the authentication code based on the pre-shared key, the in-vehicle control unit controls the vehicle based on the control information.

For example, in S403, if the control information sent by the digital key signal processing unit to the in-vehicle control unit is A, the in-vehicle control unit successfully checks the authentication code; or if the control information sent by the digital key signal processing unit to the in-vehicle control unit is not A, the in-vehicle control unit fails to check the authentication code.

It should be noted that steps or operations of the authentication method shown in FIG. 4 are merely examples for description. In this embodiment of this application, other operations or variations of the operations in FIG. 4 may be further performed. In some possible implementations, not all operations in FIG. 4 need to be performed.

In an example, S402 may not be performed. In other words, the control information received by the digital key signal processing unit may be sent by another device, and the another device may be an unauthorized device. When the digital key signal processing unit receives the control information from the unauthorized device and forwards the control information to the in-vehicle control unit, the in-vehicle control unit fails to check the authentication code based on the pre-shared key in S407. Further, the in-vehicle control unit ignores the control information sent by the unauthorized device.

In another example, after S404 is performed, if the in-vehicle control unit does not receive the authentication code within preset duration, the in-vehicle control unit determines that the check fails. The preset duration may be 0.2 second, 0.5 second, or other duration.

In still another example, in S405, the key device may generate the authentication code based on another symmetric key; or the key device may generate a signature based on an asymmetric key and send the signature to the in-vehicle control unit, so that the in-vehicle control unit checks, based on the signature, whether a source of the control information is authorized. It may be understood that the signature generated based on the asymmetric key may be an example of the first check information.

In still another example, before S401 is performed, first authentication between the key device and the digital key signal processing unit is performed based on a specific protocol. For example, the specific protocol may include a CCC protocol.

According to the authentication method provided in this embodiment of this application, the in-vehicle control unit performs secondary authentication on the key device. Even if the digital key signal processing unit is attacked by an unauthorized device, because the unauthorized device lacks a response to the secondary authentication, control information sent by the unauthorized device may be shielded by the in-vehicle control unit, thereby improving authentication security and ensuring security of the vehicle. In addition, a process of negotiating a key used for secondary authentication is integrated into a key device application process or a key device pairing process, so that a user is unaware of the process, thereby ensuring usability of the solution and reducing deployment complexity.

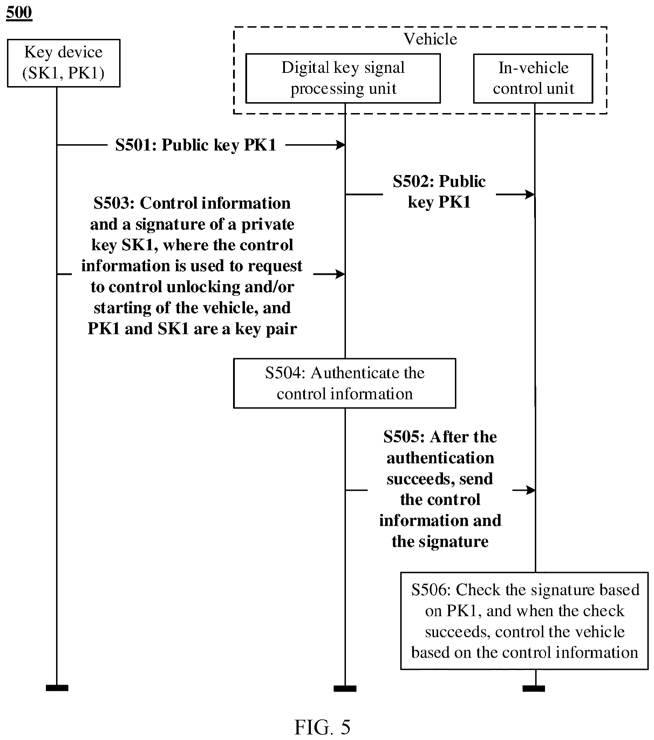

FIG. 5 is another schematic flowchart of an authentication method according to an embodiment of this application. The method 500 may be understood as another extension of the method 300. A vehicle may be understood as an example of a first device, a digital key signal processing unit may be understood as an example of a second node, an in-vehicle control unit may be understood as an example of a first node, and a key device may be understood as an example of a second device. The method 500 may include S501 to S506. S505 may be understood as an implementation of S302.

S501: The key device sends a public key PK1 to the digital key signal processing unit.

For example, during initial authentication between the key device and the digital key signal processing unit based on a CCC protocol, the key device sends its own public key PK1 to the digital key signal processing unit.

The public key PK1 may be understood as an example of the first public key in the foregoing embodiment.

S502: The digital key signal processing unit sends the public key PK1 to the in-vehicle control unit.

In some possible implementations, S501 and S502 are performed during initial authentication between the key device and the digital key signal processing unit.

In some possible implementations, after receiving the public key PK1, the in-vehicle control unit may further check authenticity of the public key PK1 by using the cloud server, to further improve security assurance.

S503: The key device sends control information and a signature of a private key SK1 to a data key signal processing unit, where the control information is used to request to control unlocking and/or starting of the vehicle, and PK1 and SK1 are a key pair.

The control information may be understood as an example of the control request information in the foregoing embodiment, and the signature of the private key SK1 may be understood as an example of the first check information in the foregoing embodiment.

In some possible implementations, the signature of the private key SK1 further includes a time identifier, and the time identifier indicates a generation moment of the signature of the private key SK1. For example, the time identifier may include a timestamp.

S504: The digital key signal processing unit authenticates the control information.

For example, the digital key signal processing unit authenticates the control information, and determines that the control information is from the key device.

S505: After the authentication succeeds, the digital key signal processing unit sends the control information and the signature to the in-vehicle control unit.

For example, the digital key signal processing unit may send the control information and the signature to the in-vehicle control unit through one packet; or the digital key signal processing unit may separately send the control information and the signature to the in-vehicle control unit through different packets.

S506: The in-vehicle control unit checks the signature based on PK1, and when the check succeeds, controls the vehicle based on the control information.

For example, in S505, if the control information sent by the digital key signal processing unit to the in-vehicle control unit is sent by the key device, the signature is also the signature of the private key SK1 of the key device, and the in-vehicle control unit successfully checks the signature based on PK1; or otherwise, the check fails.

It should be noted that steps or operations of the authentication method shown in FIG. 5 are merely examples for description. In this embodiment of this application, other operations or variations of the operations in FIG. 5 may be further performed. In some possible implementations, not all operations in FIG. 5 need to be performed.

In an example, S503 may not be performed. In other words, the control information and the signature received by the digital key signal processing unit may be sent by another device, and the another device may be an unauthorized device. When the digital key signal processing unit receives the control information and the signature from the unauthorized device and forwards the control information and the signature to the in-vehicle control unit, because the signature sent by the unauthorized device is not the signature of SK1, the in-vehicle control unit fails to check the signature based on PK1 in S506. Further, the in-vehicle control unit ignores the control information sent by the unauthorized device. It may be understood that, when the digital key signal processing unit is attacked by an attacker, even if the control information is from the unauthorized device, authentication performed on the control information in S504 may succeed. As a result, control information from the unauthorized device flows into the in-vehicle control unit.

In another example, the key device and the vehicle agree that the key device sends the signature while sending the control information to the digital key signal processing unit. Furthermore, the digital key signal processing unit sends the control information and the signature to the in-vehicle control unit at the same time. Therefore, in S505, when the digital key signal processing unit sends only the control information to the in-vehicle control unit but does not send the signature, the in-vehicle control unit may determine, based on a lack of the signature in content of received information, that the control information is sent by the unauthorized device, and further determine that the check fails.

According to the authentication method provided in this embodiment of this application, the in-vehicle control unit checks the signature from the digital key signal processing unit to determine whether the source device of the control information is authorized. Because the unauthorized device does not have the private key of the key device, the signature cannot be forged. Therefore, even if the digital key signal processing unit is attacked by the unauthorized device, the control information sent by the unauthorized device may also be shielded by the in-vehicle control unit. In addition, in a key device pairing process, the public key of the key device is deployed to the in-vehicle control unit, so that the user is unaware of the process, thereby ensuring usability of the solution and reducing deployment complexity.

It should be noted that, according to a concept of this application, a person skilled in the art may apply the solutions provided in embodiments to authentication of a three-node system such as an IT three-node system or an industrial control three-node system. Therefore, the foregoing solutions should also fall within the protection scope of this application.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

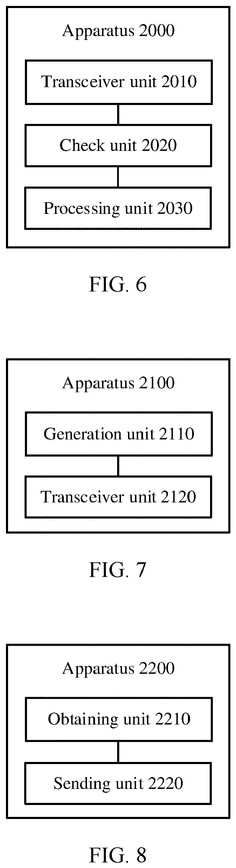

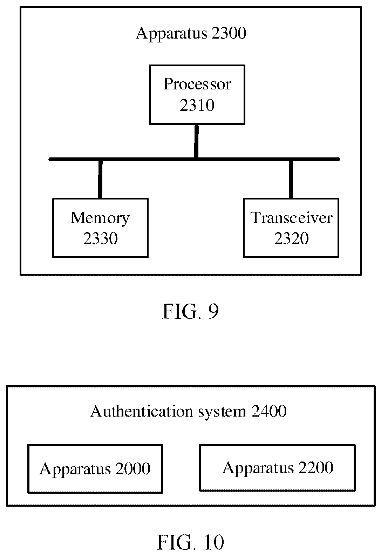

The methods provided in embodiments of this application are described above in detail with reference to FIG. 1 to FIG. 5. The following describes in detail the apparatus provided in embodiments of this application with reference to FIG. 6 and FIG. 9. It should be understood that descriptions of apparatus embodiments correspond to the descriptions of the method embodiments. Therefore, for content that is not described in detail, refer to the method embodiments. For brevity, details are not described herein again.

FIG. 6 is a block diagram of an authentication apparatus 2000 according to an embodiment of this application. The apparatus 2000 includes a transceiver unit 2010, a check unit 2020, and a processing unit 2030.

The apparatus 2000 may include a unit configured to perform the method performed by the first node in FIG. 3, or may include a unit configured to perform the method performed by the in-vehicle control unit in FIG. 4 and FIG. 5. In addition, the units in the apparatus 2000 are separately used to implement corresponding procedures of the method embodiments in FIG. 3, FIG. 4, and FIG. 5.

When the apparatus 2000 is configured to perform the method 300 in FIG. 3, the transceiver unit 2010 is configured to receive control request information from a second node. The control request information is used to request to perform a preset operation on a first device, and the first device includes the second node. The check unit 2020 is configured to check first check information. The first check information is used by the first node to check whether a source device of the control request information is authorized. The processing unit 2030 is configured to: when the check succeeds, control, based on the control request information, the first device to perform the preset operation; or when the check fails, ignore the control request information.

In some possible implementations, the transceiver unit 2010 is further configured to: send check request information based on the control request information, where the check request information is used to request the first check information from a second device, and the second device is an authorized device configured to control the first device to perform the preset operation; and receive the first check information.

In some possible implementations, the check request information includes a first random number, the first check information is associated with the first random number and a shared key between the first device and the second device, and the check unit 2020 is configured to check, the first check information based on the shared key.

In some possible implementations, the transceiver unit 2010 is further configured to receive the first check information from the second node.

In some possible implementations, the transceiver unit 2010 is further configured to receive a first public key of a second device. The second device is an authorized device configured to control the first device to perform the preset operation. The check unit 2020 is configured to check the first check information based on the first public key.

In some possible implementations, the first check information is associated with a signature generated based on a first private key of the second device, the first private key and the first public key are a key pair, and that the check unit 2020 checks successfully includes: The check unit 2020 successfully checks the first check information by using the first public key.

In some possible implementations, the first check information includes a time identifier, and the time identifier indicates a moment at which the first check information is generated.

In some possible implementations, the processing unit 2030 is further configured to: when the transceiver unit receives the control request information, determine whether the first check information is received; and when the transceiver unit does not receive the first check information within preset duration, determine that the check fails.

For example, the transceiver unit 2010, the check unit 2020, and the processing unit 2030 may be disposed in the in-vehicle control unit shown in FIG. 2.

FIG. 7 is a block diagram of an authentication apparatus 2100 according to an embodiment of this application. The apparatus 2100 includes a generation unit 2110 and a transceiver unit 2120.

The apparatus 2100 may include a unit configured to perform the method performed by the second device in FIG. 3, or may include a unit configured to perform the method performed by the key device in FIG. 4 and FIG. 5. In addition, the units in the apparatus 2100 are separately used to implement corresponding procedures of the method embodiments in FIG. 3, FIG. 4, and FIG. 5.

When the apparatus 2100 is configured to perform the method 300 in FIG. 3, the generation unit 2110 is configured to generate first check information. The first check information is used by a first node of the first device to check whether a source device of control request information is authorized, and the control request information is used to request to perform the preset operation on the first device. The transceiver unit 2120 is configured to send the first check information.

In some possible implementations, the transceiver unit 2120 is further configured to: receive check request information, where the check request information is used to request the first check information; and send the first check information based on the check request information.

In some possible implementations, the check request information includes a first random number, and the generation unit 2110 is configured to generate the first check information based on the first random number and a shared key between the first device and the authorized device.

In some possible implementations, the first check information includes a signature generated by the generation unit based on a first private key of the authorized device, the first private key and a first public key are a key pair, and the first public key is used to check the first check information.

In some possible implementations, the transceiver unit 2120 is further configured to send the first public key of the authorized device.

In some possible implementations, the first check information further includes a time identifier, and the time identifier indicates a moment at which the first check information is generated.

For example, the generation unit 2110 and the transceiver unit 2120 may be disposed in the key device shown in FIG. 2.

FIG. 8 is a block diagram of an authentication apparatus 2200 according to an embodiment of this application. The apparatus 2200 includes an obtaining unit 2210 and a sending unit 2220.

The apparatus 2100 may include a unit configured to perform the method performed by the second node in FIG. 3, or may include a unit configured to perform the method performed by the digital key signal processing unit in FIG. 4 and FIG. 5. In addition, the units in the apparatus 2100 are separately used to implement corresponding procedures of the method embodiments in FIG. 3, FIG. 4, and FIG. 5.

When the apparatus 2200 is configured to perform the method 300 in FIG. 3, the obtaining unit 2210 is configured to obtain first check information. The first check information is used by a first node of a first device to check whether a source device of control request information is authorized, and the control request information is used to request to perform a preset operation on the first device. The sending unit 2220 sends the first check information.

In some possible implementations, the first check information is associated with a first random number and a shared key between the first device and a second device, and the second device is an authorized device configured to control the first device to perform the preset operation.

In some possible implementations, the first check information is associated with a signature generated based on a first private key of the second device, the first private key and a first public key are a key pair, and the second device is an authorized device configured to control the first device to perform the preset operation. The sending unit 2220 is further configured to send the first public key.

In some possible implementations, the first check information includes a time identifier, and the time identifier indicates a moment at which the first check information is generated.

For example, the obtaining unit 2210 and the sending unit 2220 may be disposed in the digital key signal processing unit shown in FIG. 2.

It should be understood that division into the units of the foregoing apparatus is merely logical function division. During actual implementation, all or some of the units may be integrated into one physical entity, or may be physically separated. In addition, the units of the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units of the apparatus. The processor is, for example, a general-purpose processor, for example, a CPU or a microprocessor, and the memory is a memory inside the apparatus or a memory outside the apparatus. Alternatively, the units of the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a PLD. An FPGA is used as an example. The hardware circuit may include a large quantity of logic gate circuits, and a connection relationship between the logic gate circuits is configured by using a configuration file, to implement functions of some or all of the foregoing units. All units of the foregoing apparatuses may be implemented in a form of software invoked by the processor, or all units may be implemented in a form of the hardware circuit, or some units may be implemented in a form of software invoked by the processor, and a remaining part may be implemented in a form of the hardware circuit.

Each unit in the foregoing apparatus may be one or more processors (or processing circuits) configured to implement the foregoing methods, for example, a CPU, a GPU, an NPU, a TPU, a DPU, a microprocessor, a DSP, an ASIC, an FPGA, or a combination of at least two of these processor forms.

In addition, all or some of the units of the foregoing apparatus may be integrated together, or may be implemented independently. In an implementation, these units are integrated together and implemented in a form of a system-on-a-chip (system-on-a-chip, SoC). The SoC may include at least one processor, configured to implement any one of the foregoing methods or implement functions of the units of the apparatus. Types of the at least one processor may be different. For example, the at least one processor includes a CPU and an FPGA, a CPU and an artificial intelligence processor, or a CPU and a GPU.

In a specific implementation process, operations performed by the transceiver unit 2010, the check unit 2020, and the processing unit 2030 are performed by a same processor, or may be performed by different processors, for example, separately performed by a plurality of processors. In a specific implementation process, the one or more processors may be processors or chips disposed in the vehicle shown in FIG. 2.

In a specific implementation process, operations performed by the generation unit 2110 and the transceiver unit 2120 are performed by a same processor, or may be performed by different processors, for example, separately performed by a plurality of processors. In a specific implementation process, the one or more processors may be processors or chips disposed in the key device shown in FIG. 2.

In a specific implementation process, operations performed by the obtaining unit 2210 and the sending unit 2220 are performed by a same processor, or may be performed by different processors, for example, separately performed by a plurality of processors. In a specific implementation process, the one or more processors may be processors or chips disposed in the vehicle shown in FIG. 2.

FIG. 9 is a block diagram of an authentication apparatus according to an embodiment of this application. The authentication apparatus 2300 shown in FIG. 9 may include a processor 2310, a transceiver 2320, and a memory 2330. The processor 2310, the transceiver 2320, and the memory 2330 are connected by using an internal connection path. The memory 2330 is configured to store instructions. The processor 2310 is configured to execute the instructions stored in the memory 2330, to implement the authentication methods in the foregoing embodiments. Optionally, the memory 2330 may be coupled to the processor 2310 through an interface, or may be integrated with the processor 2310.

It should be noted that the transceiver 2320 may include but is not limited to a transceiver apparatus such as an input/output interface (input/output interface), to implement communication between the apparatus 2300 and another device or a communication network.

The memory 2330 may be a read-only memory (read-only memory, ROM), a static storage device, a dynamic storage device, or a random access memory (random access memory, RAM).

The transceiver 2320 uses, for example, but not limited to a transceiver apparatus of a transceiver type, to implement communication between the apparatus 2300 and another device or a communication network, to receive/send data/information used to implement the authentication methods in the foregoing embodiments.

In a specific implementation process, the apparatus 2300 may be disposed in the vehicle shown in FIG. 2, or may be disposed in the key device shown in FIG. 2.

An embodiment of this application further provides an authentication system 2400. As shown in FIG. 10, the system 2400 includes an apparatus 2000 and an apparatus 2200.

An embodiment of this application further provides an intelligent driving device. The intelligent driving device includes the foregoing system 2400 or the foregoing apparatus 2300.

In some possible implementations, the intelligent driving device may be a vehicle.

An embodiment of this application further provides a mobile terminal. The mobile terminal may include the apparatus 2100 or the apparatus 2300.

In some possible implementations, the mobile terminal may be a key device.

An embodiment of this application further provides a computer program product. The computer program product includes computer program code. When the computer program code is run on a computer, the computer is enabled to implement the authentication methods in the foregoing embodiments of this application.

An embodiment of this application further provides a computer-readable storage medium. The computer-readable medium stores computer instructions. When the computer instructions are run on a computer, the computer is enabled to implement the authentication methods in the foregoing embodiments of this application.

An embodiment of this application further provides a chip, including a circuit, configured to perform the authentication methods in the foregoing embodiments of this application.

In an implementation process, steps in the foregoing methods can be implemented by using a hardware integrated logic circuit in the processor, or by using instructions in a form of software. The methods disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the mutual coupling or direct coupling or communication connection shown or discussed may be indirect coupling or communication connection through some interfaces, apparatuses, or units, and may be in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An authentication method, comprising:
receiving, by a first node, control request information from a second node, wherein the control request information is used to request to perform a preset operation on a first device, and the first device comprises the first node and the second node;
checking, by the first node, first check information, wherein the first check information is used by the first node to check whether a source device of the control request information is authorized; and
when the check succeeds, controlling, by the first node based on the control request information, the first device to perform the preset operation; or when the check fails, ignoring, by the first node, the control request information.

2. The method according to claim 1, wherein before checking, by the first node, the first check information, the method further comprises:
sending, by the first node, check request information based on the control request information, wherein the check request information is used to request the first check information from a second device, and the second device is an authorized device configured to control the first device to perform the preset operation; and
receiving, by the first node, the first check information.

3. The method according to claim 2, wherein the check request information comprises a first random number, the first check information is associated with the first random number and a shared key between the first device and the second device, and checking, by the first node, the first check information comprises:
checking, by the first node, the first check information based on the shared key.

4. The method according to claim 1, wherein before checking, by the first node, the first check information, the method further comprises:
receiving, by the first node, the first check information from the second node.

5. The method according to claim 4, wherein the method further comprises:
receiving, by the first node, a first public key of a second device, wherein the second device is an authorized device configured to control the first device to perform the preset operation; and
checking, by the first node, the first check information comprises:
checking, by the first node, the first check information based on the first public key.

6. The method according to claim 5, wherein the first check information is associated with a signature generated based on a first private key of the second device, the first private key and the first public key are a key pair, and that the check succeeds comprises:
successfully checking, by the first node, the first check information by using the first public key.

7. The method according to any one of claims 4 to 6, wherein the first check information comprises a time identifier, and the time identifier indicates a moment at which the first check information is generated.

8. The method according to any one of claims 1 to 7, wherein the method further comprises:
when the first node receives the control request information, determining whether the first check information is received; and
that the check fails comprises: when the first node does not receive the first check information within preset duration, determining that the check fails.

9. An authentication method, comprising:
generating, by a second device, first check information, wherein the second device is an authorized device configured to control the first device to perform a preset operation, the first check information is used by a first node of the first device to check whether a source device of control request information is authorized, and the control request information is used to request to perform the preset operation on the first device; and
sending, by the second device, the first check information.

10. The method according to claim 9, wherein the method further comprises:
receiving, by the second device, check request information, wherein the check request information is used to request the first check information; and
sending, by the second device, the first check information comprises:
sending, by the second device, the first check information based on the check request information.

11. The method according to claim 10, wherein the check request information comprises a first random number, and the method further comprises:
generating, by the second device, the first check information based on the first random number and a shared key between the first device and the second device.

12. The method according to claim 9, wherein the first check information comprises a signature generated by the second device based on a first private key of the second device, the first private key and a first public key are a key pair, and the first public key is used to check the first check information.

13. The method according to claim 12, wherein the method further comprises:
sending, by the second device, the first public key.

14. The method according to claim 12 or 13, wherein the first check information further comprises a time identifier, and the time identifier indicates a moment at which the first check information is generated.

15. An authentication method, comprising:
obtaining, by a second node of a first device, first check information, wherein the first check information is used by a first node of the first device to check whether a source device of control request information is authorized, and the control request information is used to request to perform a preset operation on the first device; and
sending, by the second node, the first check information.

16. The method according to claim 15, wherein the first check information is associated with a first random number and a shared key between the first device and a second device, and the second device is an authorized device configured to control the first device to perform the preset operation.

17. The method according to claim 15, wherein the first check information is associated with a signature generated based on a first private key of a second device, the first private key and a first public key are a key pair, the second device is an authorized device configured to control the first device to perform the preset operation, and the method further comprises:
sending, by the second node, the first public key.

18. The method according to claim 17, wherein the first check information comprises a time identifier, and the time identifier indicates a moment at which the first check information is generated.

19. An authentication apparatus, comprising a transceiver unit, a check unit, and a processing unit, wherein
the transceiver unit is configured to receive control request information from a second node, wherein the control request information is used to request to perform a preset operation on a first device, and the first device comprises the second node;
the check unit is configured to check first check information, wherein the first check information is used by the first node to check whether a source device of the control request information is authorized; and
the processing unit is configured to: when the check succeeds, control, based on the control request information, the first device to perform the preset operation; or when the check fails, ignore the control request information.

20. The apparatus according to claim 19, wherein the transceiver unit is further configured to:
send check request information based on the control request information, wherein the check request information is used to request the first check information from a second device, and the second device is an authorized device configured to control the first device to perform the preset operation; and
receive the first check information.

21. The apparatus according to claim 20, wherein the check request information comprises a first random number, the first check information is associated with the first random number and a shared key between the first device and the second device, and the check unit is configured to:
check, the first check information based on the shared key.

22. The apparatus according to claim 19, wherein the transceiver unit is further configured to:
receive the first check information from the second node.

23. The apparatus according to claim 22, wherein the transceiver unit is further configured to:
receive a first public key of a second device, wherein the second device is an authorized device configured to control the first device to perform the preset operation; and
the check unit is configured to:
check the first check information based on the first public key.

24. The apparatus according to claim 23, wherein the first check information is associated with a signature generated based on a first private key of the second device, the first private key and the first public key are a key pair, and that the check unit checks successfully comprises:
the check unit successfully checks the first check information by using the first public key.

25. The apparatus according to any one of claims 22 to 24, wherein the first check information comprises a time identifier, and the time identifier indicates a moment at which the first check information is generated.

26. The apparatus according to any one of claims 19 to 25, wherein the processing unit is further configured to:
when the transceiver unit receives the control request information, determine whether the first check information is received; and
when the transceiver unit does not receive the first check information within preset duration, determine that the check fails.

27. An authentication apparatus, wherein the apparatus is disposed in an authorized device configured to control a first device to perform a preset operation, and the apparatus comprises a generation unit and a transceiver unit, wherein
the generation unit is configured to generate first check information, wherein the first check information is used by a first node of the first device to check whether a source device of control request information is authorized, and the control request information is used to request to perform the preset operation on the first device; and
the transceiver unit is configured to send the first check information.

28. The apparatus according to claim 27, wherein the transceiver unit is further configured to:
receive check request information, wherein the check request information is used to request the first check information; and
send the first check information based on the check request information.

29. The apparatus according to claim 28, wherein the check request information comprises a first random number, and the generation unit is configured to:
generate the first check information based on the first random number and a shared key between the first device and the authorized device.

30. The apparatus according to claim 27, wherein the first check information comprises a signature generated by the generation unit based on a first private key of the authorized device, the first private key and a first public key are a key pair, and the first public key is used to check the first check information.

31. The apparatus according to claim 30, wherein the transceiver unit is further configured to:
send the first public key of the authorized device.

32. The apparatus according to claim 30 or 31, wherein the first check information further comprises a time identifier, and the time identifier indicates a moment at which the first check information is generated.

33. An authentication apparatus, comprising an obtaining unit and a sending unit, wherein the obtaining unit is configured to obtain first check information, wherein the first check information is used by a first node of a first device to check whether a source device of control request information is authorized, and the control request information is used to request to perform a preset operation on the first device; and
the sending unit sends the first check information.

34. The apparatus according to claim 33, wherein the first check information is associated with a first random number and a shared key between the first device and a second device, and the second device is an authorized device configured to control the first device to perform the preset operation.

35. The apparatus according to claim 33, wherein the first check information is associated with a signature generated based on a first private key of a second device, the first private key and a first public key are a key pair, the second device is an authorized device configured to control the first device to perform the preset operation, and the sending unit is further configured to:
send the first public key.

36. The apparatus according to claim 35, wherein the first check information comprises a time identifier, and the time identifier indicates a moment at which the first check information is generated.

37. An authentication apparatus, comprising:
a memory, configured to store a computer program; and
a processor, configured to execute a computer program stored in the memory, to enable the apparatus to perform the method according to any one of claims 1 to 8, the method according to any one of claims 9 to 14, or the method according to any one of claims 15 to 18.

38. An authentication system, wherein the system comprises the apparatus according to any one of claims 19 to 26 and the apparatus according to any one of claims 33 to 36.

39. An intelligent driving device, comprising the system according to claim 38.

40. A mobile terminal, comprising the apparatus according to any one of claims 27 to 32.

41. A computer-readable storage medium, wherein the computer-readable storage medium stores instructions, and when the instructions are executed by a processor, the processor is enabled to implement the method according to any one of claims 1 to 8, or the method according to any one of claims 9 to 14, or the method according to any one of claims 15 to 18.

42. A chip, wherein the chip comprises a circuit, and the circuit is configured to perform the method according to any one of claims 1 to 8, or the method according to any one of claims 9 to 14, or the method according to any one of claims 15 to 18.
